# EUROPÄISCHE PATENTSCHRIFT

(11) **EP 0 611 678 B1**
(45) Veröffentlichungstag und Bekanntmachung des Hinweises auf die Patenterteilung: **16.07.1997**
(21) Anmeldenummer: 94101767.5
(22) Anmeldetag: 05.02.1994
(51) Int. Cl.: B60Q 1/30

(54) **Heckspoiler für Kraftfahrzeuge**
Rear spoiler for vehicle
Becquet arrière pour véhicule

(30) Priorität: 15.02.1993 DE 9302113 U
(43) Veröffentlichungstag der Anmeldung: 24.08.1994
(73) Patentinhaber: Hella KG Hueck & Co., 59552 Lippstadt (DE)
(72) Erfinder: Thiemann, Hubert, D-59556 Lippstadt (DE); Pohl, Reiner, D-59558 Lippstadt (DE)

(56) Entgegenhaltungen:
- DE-A- 3 942 151
- DE-A- 4 003 569
- US-A- 4 845 600

## Beschreibung

Die Erfindung betrifft einen Heckspoiler für Kraftfahrzeuge, welcher ein aus Kunststoff bestehender und im Blasverfahren hergestellter langgestreckter Hohlkörper ist und am Fahrzeug angebaut in seiner Längsausdehnung quer zur Fahrzeuglängsachse verläuft, mit folgenden Merkmalen:
- der Heckspoiler baut in seiner Höhe flach und weist eine obere und untere großflächige Seitenwand auf, zwischen denen von der Rückseite des Fahrzeugs her gesehen eine rechteckförmige Öffnung, deren lange Seitenränder in Richtung der Längsausdehnung des Heckspoilers verlaufen, in den Heckspoiler eingebracht ist,
- ein Bauteil ist in Fahrtrichtung des Fahrzeugs nach vorne hin in die rechteckförmige Öffnung des Heckspoilers eingesetzt und mittels Befestigungselementen lösbar mit dem Heckspoiler verbunden.

Ein Heckspoiler dieserart ist aus der DE 40 03 807 C2 bekannt. Das in eine rechteckförmige Öffnung eingesetzte Bauteil ist eine langgestreckte zusätzliche Bremsleuchte. Die Bremsleuchte weist eine rinnenartige, lichtdurchlässige Abdeckscheibe auf, welche durch Seitenränder seitlich abgeschlossen ist und mit ihrem umlaufenden äußeren Rand auf eine Leuchtdioden tragende Grundplatte aufgesetzt und mit dieser dicht verschweißt ist. Die Bremsleuchte ist in Fahrtrichtung nach vorne hin durch die rechteckförmige Öffnung hindurchgeführt und mit an der Rückseite der Grundplatte angeformten Befestigungslaschen an der unteren großflächigen Seitenwand des Heckspoilers mit Befestigungsmitteln, welche Befestigungsschrauben sind, befestigt. Die rechteckförmige Öffnung des Heckspoilers ist durch eine entsprechend große Vorderseite der Bremsleuchte abgeschlossen. Hierbei ist es nachteilig, daß die Befestigungsschrauben nur von der Unterseite des Heckspoilers her zugänglich sind und somit, um einen Wechsel der Bremsleuchte vornehmen zu können, entweder der Heckspoiler wegen des oftmals kleinen Spaltes zwischen Heckspoiler und Karosserie von der Karosserie abgenommen werden muß oder bei angebautem Heckspoiler die Befestigungsschrauben mit einem Spezialwerkzeug gelöst werden müssen, durch welches die lackierte Oberfläche der Karosserie leicht beschädigt werden kann oder welches nicht zur Verfügung steht. Zudem ist die Bremsleuchte nicht vibrationsfrei an der unteren großflächigen Seitenwandung gehalten, weil diese wegen ihrer Größe im Bereich der Befestigungsstellen der Bremsleuchte nicht gegen ein Durchwölben nach unten hin gehalten ist. Ein solches Durchwölben nach unten hin kann sehr groß sein, wenn der Heckspoiler aus weichem Kunststoff hergestellt ist, welcher z. B. bei nachträglichen am Kraftfahrzeug anbaubaren Heckspoilern vorgeschrieben ist, und wenn für den Heckspoiler eine große Wärmebelastung, wie z. B. durch die Sonne, besteht. Ein solches Durchwölben der unteren Seitenwand wird noch dadurch verstärkt, weil die untere Seitenwandung nicht nur sich selbst, sondern auch allein die Bremsleuchte trägt. Bei einem Durchwölben der unteren großflächigen Seitenwand nach unten hin, kann sowohl oberhalb als auch unterhalb der Bremsleuchte ein unerwünscht großer Spalt zum Heckspoiler hin entstehen. Der obere Spalt entsteht, weil die Bremsleuchte ausschließlich an der unteren labilen Seitenwand des Heckspoilers befestigt ist und sich somit zusammen mit der unteren Seitenwand nach unten bewegt. Der untere Spalt entsteht, weil der sich bis zur Vorderseite der Bremsleuchte hin erstreckende untere Seitenrand der Öffnung nicht nach unten hin abgestützt ist. Solche Spalten sind aus stilistischen und aerodynamischen Gründen unerwünscht. Außerdem kann durch solche Spalte Wasser in das Innere des Heckspoilers eindringen.

Aufgabe der Erfindung ist es, den im Oberbegriff des Anspruchs 1 beschriebenen Heckspoiler derart zu gestalten, daß das Bauteil, auch wenn es sehr tief in die rechteckförmige Öffnung eintauchen würde, sowohl weitestgehend vibrationsfrei in dem Heckspoiler gehalten ist als auch den Heckspoiler im Bereich seiner rechteckförmigen Öffnung versteift und die an die rechteckförmige Öffnung angrenzende, untere großflächige Seitenwand auch bei sehr großer Wärmeeinwirkung nach unten hin gegen ein Durchwölben arretiert. Darüber hinaus soll das Bauteil von der entgegen seiner Einsetzrichtung gerichteten Vorderseite her montiert und demontiert werden können. Diese Aufgabe wird nach der Erfindung dadurch gelöst, daß
- die kurzen Seitenränder der rechteckförmigen Öffnung im Heckspoiler tiefliegend angeordnet sind, entgegen der Einsetzrichtung des Bauteils gerichtet sind und mit ihrer Außenseite als Anlagefläche für das Bauteil dienen,
- das Bauteil mit Befestigungsmitteln, welche von der Vorderseite her zugänglich sind, an den kurzen Seitenrändern der rechteckförmigen Öffnung lösbar befestigt ist,
- das Bauteil an seiner Unterseite einen Wandabschnitt aufweist, welcher sich annähernd über die gesamte Länge des Bauteils erstreckt, mit seinem freien Ende in Einsetzrichtung des Bauteils weist und den unteren langen Seitenrand der rechteckförmigen Öffnung des Heckspoilers außen überlappt.

Hierbei verläuft die Ebene, in welcher die Befestigungsstellen der Bremsleuchte liegen, durch das gesamte langgestreckte Bauteil hindurch und nahe oder durch den Schwerpunkt der Bremsleuchte hindurch, so daß die Bremsleuchte, ohne zusätzliche Versteifungsmittel zu ihren Befestigungspunkten hin ausführen zu müssen, vibrationsfrei an ihren Befestigungspunkten gehalten werden kann. Der den unteren Seitenrand der rechteckförmigen Öffnung des Heckspoilers unterfassende Wandabschnitt verhindert nicht nur ein Durchwölben der unteren Seitenwand nach unten hin, sondern versteift auch das Bauteil selbst und somit den Heckspoiler. Da die kurzen Seitenränder des Heckspoilers nicht nur mit der unteren, sondern auch mit der oberen Seitenwand des Heckspoilers verbunden sind, ist das Bauteil vibrationsfrei von dem Heckspoiler getragen.

Weiterhin ist es vorteilhaft, wenn das Bauteil eine eine Kraftfahrzeugleuchte ersetzende Abdeckkappe ist. Dadurch kann der mit einer öffnunv für eine Kraftfahrzeugleuchte versehene Heckspoiler auch verwendet werden, wenn der Heckspoiler nicht mit einer Kraftfahrzeugleuchte ausgeführt sein soll.

Vorteilhaft ist es weiterhin, wenn die obere großflächige Seitenwand des Heckspoilers, ausgehend von den kurzen Seitenrändern der Öffnung, mit einem zur Rückseite des Fahrzeugs hinweisenden Randabschnitt überragt, welcher doppelwandig ausgeführt ist und mit seiner unteren Wandung in die beiden kurzen Seitenränder der Öffnung übergeht. Dadurch ist der Heckspoiler im Bereich seiner kurzen Seitenränder, welche der Befestigung des Bauteils dienen, sehr biegesteif ausgeführt. Außerdem bestehen auf der Oberseite des Heckspoilers keine aus stilistischen Gründen störenden Kanten. Ferner ist die Heckleuchte von oben her gegen Beschädigung geschützt angeordnet und der die Heckleuchte überragende Randabschnitt ist wegen seiner Doppelwandigkeit sehr biegesteif.

Von Vorteil ist es weiterhin, wenn die kurzen Seitenränder und die untere lange Kante der rechteckförmigen Öffnung annähernd in einer Ebene verlaufen. Hierbei liegt der untere übergangsbereich zwischen dem Bauteil und dem Heckspoiler weit unterhalb des Heckspoilers und ist somit nicht bei angebautem Heckspoiler zu sehen.

Ein weiterer Vorteil ist es, wenn der sich mit dem Wandabschnitt des Bauteils überlappende Seitenrandabschnitt der Öffnung so weit nach oben hin versetzt verläuft, daß die Außenseite der überlappung und somit die Außenseite des Wandabschnitts des Bauteils bündig zu der an ihn angrenzenden Außenfläche des Heckspoilers verläuft. Dadurch bestehen keine vorstehenden Kanten und Ecken und somit auch keine Verletzungsgefahr.

Bei einer besonders vorteilhaften Weiterbildung der Erfindung ist die überlappung von einer Nut-Feder-Verbindung gebildet, bei welcher der untere lange Seitenrand der Öffnung die Feder ist, die in einer Nut des Bauteils eingreift. Dadurch ist der untere lange Seitenrand der rechteckförmigen Öffnung sowohl nach unten als auch nach oben hin arretiert.

Ferner ist es vorteilhaft, wenn in die kurzen Seitenränder der rechteckförmigen Öffnung jeweils eine Befestigungsöffnung eingebracht ist, in welche eine als Befestigungsmittel dienende und durch eine Öffnung in dem Bauteil hindurchgeführte Befestigungsschraube eingreift. Dadurch ist ein Montieren und Demontieren des Bauteils leicht und schnell durchführbar.

Ebenfalls ist es vorteilhaft, wenn bei der Verwendung einer Kraftfahrzeugleuchte als Bauteil die Außenseite des unteren Wandabschnitts bündig zur Außenseite einer lichtdurchlässigen Abdeckscheibe der Kraftfahrzeugleuchte verläuft. Dadurch kann die Kraftfahrzeugleuchte mit ihrer gesamten Außenseite an die sie angrenzende Außenkontur des Heckspoilers angepaßt werden.

Weiterhin ist es vorteilhaft, wenn der Wandabschnitt des Bauteils ein separates Teil ist und mit einer Gehäusewand der Kraftfahrzeugleuchte fest verbunden ist. Dadurch kann eine vorhandene Kraftfahrzeugleuchte verwendet werden. Die Verbindung zwischen dem Gehäuse und dem Wandabschnitt kann z. B. durch Schweißen oder Kleben erfolgen.

Bei einer anderen vorteilhaften Weiterbildung der Erfindung ist der Wandabschnitt einstückig mit der lichtdurchlässigen Abdeckscheibe oder der Seitenwand eines Gehäuses der Kraftfahrzeugleuchte ausgeführt, und des weiteren ist die Nut der Nut-Feder-Verbindung von dem Wandabschnitt und der dieser benachbarten Seitenwand des Gehäuses der Kraftfahrzeugleuchte gebildet. Eine solche Lösung ist einfach und kann sehr kostengünstig hergestellt werden.

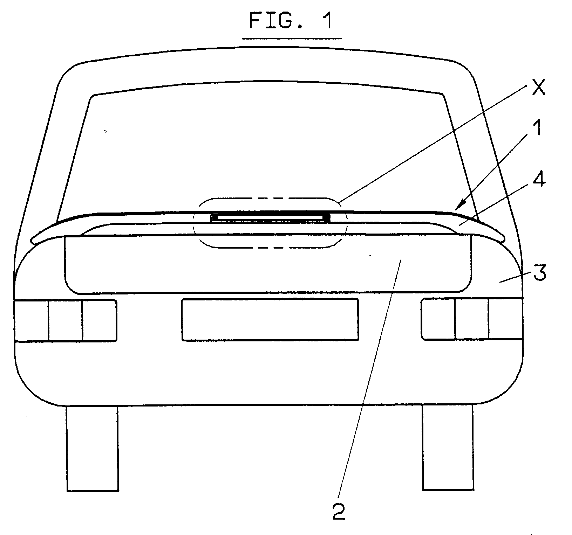

Ein Ausführungsbeispiel der Erfindung ist in der Zeichnung dargestellt, und zwar zeigt
- Fig. 1: eine Rückseite eines Kraftfahrzeugs mit einem Heckspoiler, welcher in einer Öffnung ein Bauteil aufnimmt,

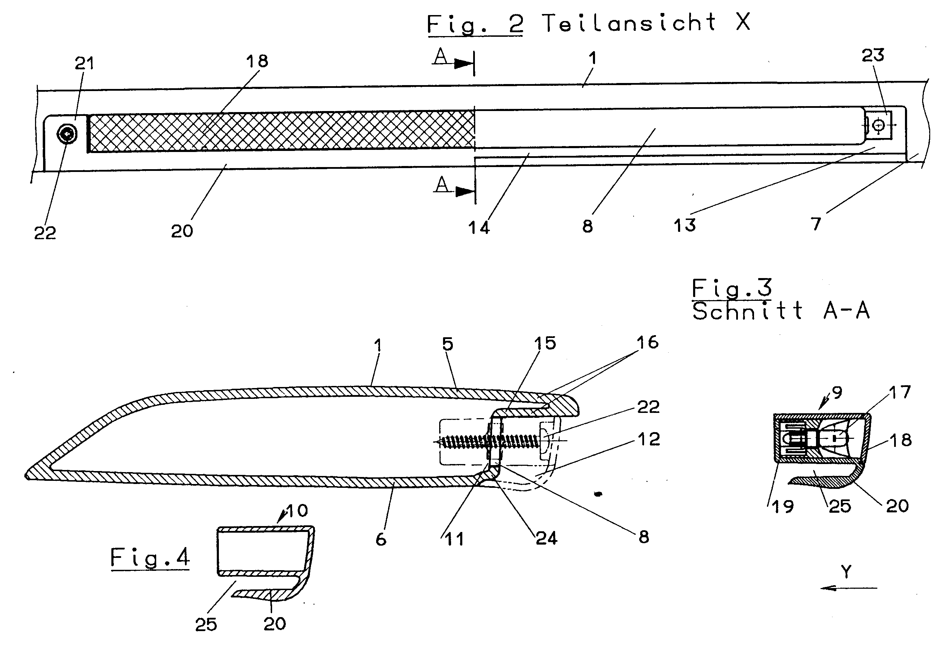

- Fig. 2: eine Teilansicht X der Fig. 1, in welcher das Bauteil und die ihn aufnehmende Öffnung des Heckspoilers zur Hälfte dargestellt sind,
- Fig. 3: einen Schnitt nach der Linie A-A durch den Heckspoiler in der Fig. 2 und das Bauteil, welches eine Kraftfahrzeugleuchte ist, vor dem Einsetzen in die Öffnung des Heckspoilers und
- Fig. 4: einen Schnitt nach der Linie A-A durch das Bauteil, wenn es ausschließlich eine Abdeckkappe ist.

Ein Heckspoiler (1) ist an einem Kofferraumdeckel (2) eines Kraftfahrzeugs (3) lösbar befestigt. Der Heckspoiler (1) ist aus weichem Kunststoff und ist ein im Blasverfahren hergestellter Hohlkörper. Die Form des Heckspoilers ist langgestreckt und verläuft in seiner Längsausdehnung quer zur Fahrzeuglängsachse und annähernd horizontal, wobei seine Endabschnitte (4) zur Kofferraumklappe hin weisen und an dieser lösbar befestigt sind. Der Heckspoiler weist eine großflächige obere und untere Seitenwand (5 und 6) und eine entgegen der Fahrtrichtung des Fahrzeugs nach vorne hin gerichtete schmale Seitenwand (7) auf. In die schmale Seitenwand (7) ist im mittleren Bereich des Heckspoilers (1) eine horizontal verlaufende, langgestreckte, rechteckförmige Öffnung (8) eingebracht. In die Öffnung (8) des Heckspoilers (1) ist in Fahrtrichtung (Y) des Fahrzeugs (3) nach vorne hin ein Bauteil (9, 10) eingesetzt. Das Bauteil ist entweder eine zusätzliche hochgesetzte Bremsleuchte (9) (siehe Fig. 3), oder eine die Bremsleuchte ersetzende Abdeckkappe (10) (siehe Fig. 4). Die rechteckförmige Öffnung (8) ist in eine entgegen der Einsetzrichtung (Y) gerichtete Wandung (11) einer Vertiefung (12) des Heckspoilers (1) eingebracht. Die kurzen Seitenränder (13) der rechteckförmigen Öffnung (8) dienen der Anlage und zur Befestigung der Bremsleuchte (9). Der untere lange Seitenrand (14) der rechteckförmigen Öffnung (8) verläuft mit seinem freien Ende in der Ebene, in welcher die kurzen Seitenränder (13) liegen und geht in die untere Seitenwand (6) des Heckspoilers über, während das freie Ende des oberen langen Seitenrandes (15) der rechteckförmigen Öffnung (8) die großflächige obere Seitenwand (5) des Heckspoilers mit einem zur Rückseite des Fahrzeugs weisenden, doppelwandig ausgeführten Randabschnitt (16) überragt. Die untere Wandung des doppelwandig ausgeführten Randabschnitts (16) bildet den oberen Seitenrand (15) der rechteckförmigen Öffnung (8) und geht in die kurzen Seitenwandungen (13) über.

Die Bremsleuchte (9), welche in ihrer Höhe schmal baut und in horizontaler Richtung langgestreckt ausgeführt ist, weist ein Lampen (17) aufnehmendes Gehäuse auf, welches aus einer lichtdurchlässigen Abdeckscheibe (18) und einer die Lampen (17) tragenden Grundplatte (19) zusammengesetzt ist. Unterhalb des Gehäuses (18, 19) verläuft in einem Abstand zu diesem ein an seinem vorderen Rand angeformter Wandabschnitt (20). Der Wandabschnitt (20) ist einstückig mit der Grundplatte (19) ausgeführt, verläuft mit seiner Außenseite bündig zu der von der lichtdurchlässigen Abdeckscheibe (18) gebildeten Vorderseite der Bremsleuchte (9) und weist mit seinem freien Ende in Einsetzrichtung (Y).

Nach dem Einsetzen der Bremsleuchte (9) in Richtung (Y) in die Vertiefung (12) und in die rechteckförmige Öffnung (8) des Heckspoilers (1), liegt die Bremsleuchte mit seitlich angeformten Haltelappen (21) an der Außenseite der kurzen Seitenränder (13) der Öffnung (8) an. Die Haltelappen (21), der Wandabschnitt (20) und die lichtdurchlässige Abdeckscheibe (18) verlaufen mit ihren Außenseiten bündig zueinander. Als Befestigungsmittel für die Bremsleuchte (9) dienen Befestigungsschrauben (22), welche durch Öffnungen in den Haltelappen (21) hindurchgeführt sind und in einer Mutter (23) des kurzen Seitenrandes der Öffnung (8) eingreifen. Als Mutter (23) dient ein U-förmig gebogenes Blech, welches von der Innenseite der Öffnung (8) her auf ihre kurzen Seitenränder (13) aufgeschoben ist. Der Wandabschnitt (20) überlappt sich mit seinem freien Endabschmitt mit dem unteren Seitenrand der rechteckförmigen Öffnung (8) des Heckspoilers (1). Die sich überlappenden Abschnitte liegen aneinander an oder weisen einen kleinen Abstand zueinander auf. Der untere Seitenrand der rechteckförmigen Öffnung und somit der untere Seitenrand der Wandung (11) verläuft in dem Abschnitt (24), mit dem er sich mit dem Wandabschnitt (20) der Bremsleuchte überlappt nach oben hin versetzt, und zwar mindestens um einen solchen Betrag, wie der Wandabschnitt (20) dick ist. Dadurch kann der Wandabschnitt (20) der Bremsleuchte (9) mit seiner Außenseite bündig zu der an ihn angrenzenden Außenseite der unteren Seitenwand des Heckspoilers verlaufen. Die Bremsleuchte baut mit ihrem die Lampen (17) aufnehmenden Gehäuse (18, 19) so tief, daß es nicht nur in der Vertiefung (12) des Heckspoilers angeordnet ist, sondern auch mit dem durch die rechteckförmige Öffnung (8) hindurchgesteckten Endabschnitt im Inneren des Heckspoilers. Der doppelwandige Randabschnitt überragt zur Rückseite des Fahrzeugs hin die Vorderseite der Bremsleuchte (9), so daß diese nach oben hin besonders gut gegen Beschädigung geschützt angeordnet ist.

In Fig. 5 ist die Abdeckkappe (10) gezeigt, welche an Stelle der Bremsleuchte (9) in die Öffnung (8) des Heckspoilers einsetzbar ist. Dadurch kann der Heckspoiler (1) sowohl mit als auch ohne Bremsleuchte (9) ausgeführt sein, und der Bereich der rechteckförmigen Öffnung ist in beiden Fällen versteift, da die Abdeckkappe (10), ebenfalls wie die Bremsleuchte (9), den unteren langen Seitenrand der rechteckförmigen Öffnung mit dem Wandabschnitt (20) unterfaßt.

## Patentansprüche

1. Heckspoiler für Kraftfahrzeuge, welcher ein aus Kunststoff bestehender und im Blasverfahren hergestellter Hohlkörper ist und am Fahrzeug angebaut in seiner Längsausdehnung quer zur Fahrzeuglängsachse verläuft, mit folgenden Merkmalen:
- der Heckspoiler (1) baut in seiner Höhe flach und weist eine obere und untere großflächige Seitenwand (5 und 6) auf, zwischen denen von der Rückseite des Fahrzeugs (3) her gesehen eine rechteckförmige Öffnung (8), deren lange Seitenränder (14 und 15) in Richtung der Längsausdehnung des Heckspoilers (1) verlaufen, in den Heckspoiler (1) eingebracht ist,
- ein Bauteil (9 bzw. 10) ist in Fahrtrichtung des Fahrzeugs (3) nach vorne hin in die rechteckförmige Öffnung (8) des Heckspoilers (1) eingesetzt und mittels Befestigungselementen (22, 23) lösbar mit dem Heckspoiler (1) verbunden,
dadurch gekennzeichnet, daß
- die kurzen Seitenränder (13) der rechteckförmigen Öffnung (8) im Heckspoiler (1) vertieft liegend angeordnet sind, entgegen der Einsetzrichtung (Y) des Bauteils (9 bzw. 10) gerichtet sind und mit ihrer Außenseite als Anlagefläche für das Bauteil (9 bzw. 10) dienen,
- die Befestigungselemente (22, 23) des Bauteils (9 bzw. 10) von seiner Vorderseite her zugänglich sind und an den kurzen Seitenrändern (13) der rechteckförmigen Öffnung (8) lösbar befestigt sind,
- das Bauteil (9 bzw. 10) an seiner Unterseite einen Wandabschnitt (20) aufweist, welcher sich annähernd über die gesamte Länge des Bauteils (9 bzw. 10) erstreckt und mit seinem freien Ende in Einsetzrichtung (Y) des Bauteils weist und den unteren langen Seitenrand (14) der rechteckförmigen Öffnung (8) des Heckspoilers außen überlappt.

2. Heckspoiler nach Anspruch 1, dadurch gekennzeichnet, daß das Bauteil (9) eine eine Kraftfahrzeugleuchte (9) ersetzende Abdeckkappe (10) ist.

3. Heckspoiler nach Anspruch 1 oder 2, dadurch gekennzeichnet, daß die obere großflächige Seitenwand (5) des Heckspoilers (1), ausgehend von den kurzen Seitenrändern (13) der Öffnung (8), mit einem zur Rückseite des Fahrzeugs weisenden Randabschnitt (16) überragt.

4. Heckspoiler nach Anspruch 3, dadurch gekennzeichnet, daß der die Öffnung (8) überragende Randabschnitt (16) doppelwandig ausgeführt ist und mit seiner unteren Wandung in die beiden kurzen Seitenränder (13) der Öffnung (8) übergeht.

5. Heckspoiler nach einem der Ansprüche 1 bis 4, dadurch gekennzeichnet, daß die kurzen Seitenränder (13) und die untere lange Kante der rechteckförmigen Öffnung (8) annähernd in einer Ebene verlaufen.

6. Heckspoiler nach einem der Ansprüche 1 bis 5, dadurch gekennzeichnet, daß der sich mit dem Wandabschnitt (20) des Bauteils (9 bzw. 10) überlappende Seitenrandabschnitt (24) der Öffnung (8) so weit nach oben hin versetzt verläuft, daß die Außenseite der Überlappung und somit die Außenseite des Wandabschnitts (20) des Bauteils bündig zu der an ihn angrenzenden Außenfläche des Heckspoilers (1) verläuft.

7. Heckspoiler nach einem der Ansprüche 1 bis 6, dadurch gekennzeichnet, daß die Überlappung von einer Nut-Feder-Verbindung gebildet ist, bei welcher der untere lange Seitenrand (14) der Öffnung (8) die Feder ist, die in eine Nut (25) des Bauteils (9 bzw. 10) eingreift.

8. Heckspoiler nach Anspruch 7, dadurch gekennzeichnet, daß die Nut ein im Querschnitt U-förmig gebogener freier Endabschnitt des Wandabschnitts (20) des Bauteils (9 bzw. 10) ist.

9. Heckspoiler nach einem der Ansprüche 1 bis 8, dadurch gekennzeichnet, daß in die kurzen Seitenränder (13) der rechteckförmigen Öffnung (8) jeweils eine Befestigungsöffnung eingebracht ist, in welche eine als Befestigungsmittel (22) dienende und durch eine Öffnung in dem Bauteil (9 bzw. 10) hindurchgeführte Befestigungsschraube eingreift.

10. Heckspoiler nach einem der Ansprüche 1 bis 9, dadurch gekennzeichnet, daß bei der Verwendung einer Kraftfahrzeugleuchte als Bauteil die Außenseite des unteren Wandabschnitts (20) bündig zur Außenseite einer lichtdurchlässigen Abdeckscheibe (18) der Kraftfahrzeugleuchte verläuft.

11. Heckspoiler nach einem der Ansprüche 1 bis 10, dadurch gekennzeichnet, daß auf die kurzen Seitenränder (23) der rechteckförmigen Öffnung (8) her ein im Querschnitt U-förmiges Blechteil (23), welches als Mutter für die Befestigungsschraube (22) dient, selbstrastend oder klemmend aufgeschoben ist.

12. Heckspoiler nach Anspruch 10 oder 11, dadurch gekennzeichnet, daß der Wandabschnitt (20) des Bauteils (9 bzw. 10) ein separates Teil ist und mit einer Gehäusewand der Kraftfahrzeugleuchte fest verbunden ist.

13. Heckspoiler nach Anspruch 10 oder 11, dadurch gekennzeichnet, daß der Wandabschnitt (20) einstückig mit der lichtdurchlässigen Abdeckscheibe (18) oder einer Seitenwand eines Gehäuses der Kraftfahrzeugleuchte ausgeführt ist.

14. Heckspoiler nach einem der Ansprüche 10 bis 13, dadurch gekennzeichnet, daß die Nut (25) der Nut-Feder-Verbindung von dem Wandabschnitt (20) und der diesem benachbarten Seitenwand des Gehäuses (18, 19) der Kraftfahrzeugleuchte gebildet ist.

## Claims

1. Rear spoiler for motor vehicles, comprising an elongate hollow body made from a blow-moulded plastic which is mounted on the vehicle in longitudinal extension thereof, so as to run at right angles to the vehicle's longitudinal axis, and having the following characteristics:
- the rear spoiler (1) is a flat construction and at the top and bottom it features respective large-area lateral panels (5 and 6) between which, viewed from the rear of the vehicle (3), the rear spoiler (1) incorporates a rectangular opening (8) whose long lateral edges (14 and 15) extend in the direction of the longitudinal extension of the rear spoiler (1),
- a component (9 or 10, respectively) is inserted into the rectangular opening (8) in the rear spoiler (1), in the direction of forward travel of the vehicle (3), and is joined to the rear spoiler (1) in a detachable manner by means of fastening elements (22, 23),
characterised in that
- the short lateral edges (13) of the rectangular opening (8) are set low in the rear spoiler (1), away from the direction (Y) in which the component (9 or 10, respectively) was inserted, and the outside of said edges is used to act as a supporting surface for the component (9 or 10, respectively),
- the fastening elements (22, 23) of the component (9 or 10, respectively) are accessible from the front and are fastened in a detachable manner to the short lateral edges (13) of the rectangular opening (8),
- the underside of the component (9 or 10, respectively) features a wall section (20) which extends approximately the whole length of the component (9 or 10, respectively), has its free end facing in the direction (Y) in which the component was inserted, and externally overlaps the lower long lateral edge (14) of the rectangular opening (8) in the rear spoiler.

2. Rear spoiler according to claim 1, characterised in that the component (9) is a cover (10) which takes the place of a motor vehicle lamp (9).

3. Rear spoiler according to claim 1 or 2, characterised in that the upper large-area side panel (5) of the rear spoiler (1), proceeding from the short lateral edges (13) of the opening (8), overhangs by a rim section (16) which points towards the back of the vehicle.

4. Rear spoiler according to claim 3, characterised in that the rim section (16) which overhangs the opening (8) is a double-walled construction and its lower wall panel merges into the two short lateral edges (13) of the opening (8).

5. Rear spoiler according to any of claims 1 to 4, characterised in that the short lateral edges (13) and the lower long edge of the rectangular opening (8) extend in approximately the same plane.

6. Rear spoiler according to any of claims 1 to 5, characterised in that the lateral edge portion (24) of the opening (8) overlapping with the wall section (20) of the component (9 or 10, respectively) is offset towards the top by such an amount that the outside of the overlap, and hence the outside of the wall section (20) of the component, extends flush with the contiguous external surface of the rear spoiler (1).

7. Rear spoiler according to any of claims 1 to 6, characterised in that the overlap is constituted by a tongue and groove joint in which the lower long lateral edge (14) of the opening (8) is the tongue, which engages in a groove (25) in the component (9 or 10, respectively).

8. Rear spoiler according to claim 7, characterised in that the groove is a free end portion, bent into a U-shaped cross-section, of the wall section (20) of the component (9 or 10, respectively).

9. Rear spoiler according to any of claims 1 to 8, characterised in that each of the short lateral edges (13) of the rectangular opening (8) incorporates a fixing opening into which engages a fixing screw acting as a fastening means (22) and passing through an opening in the component (9 or 10, respectively).

10. Rear spoiler according to any of claims 1 to 9, characterised in that when a motor vehicle lamp is used as the component, the outside of the lower wall section (20) runs flush with the outside of a transparent cover plate (18) of the motor vehicle lamp.

11. Rear spoiler according to any of claims 1 to 10, characterised in that a metal plate (23) of U-shaped cross-section, acting as a nut for the fixing screw (22), is pushed in self-locking or gripping manner onto the short lateral edges (23) of the rectangular opening (8).

12. Rear spoiler according to claim 10 or 11,charcterised in that the wall section (20) of the component (9 or 10, respectively) is a separate part and is permanently joined to a wall of the motor vehicle lamp housing.

13. Rear spoiler according to claim 10 or 11, characterised in that the wall section (20) is constructed in one piece with the transparent cover plate (18) or a side wall of a motor vehicle lamp housing.

14. Rear spoiler according to any of claims 10 to 13, characterised in that the groove (25) of the tongue and groove joint is constituted by the wall section (20) and the adjoining side wall of the housing (18, 19) of the motor vehicle lamp.

## Revendications

1. Becquet arrière pour véhicules automobiles, qui est un corps creux constitué de plastique et fabriqué par le procédé de soufflage et qui, monté sur le véhicule, est orienté avec son extension longitudinale perpendiculaire à l'axe longitudinal du véhicule présentant les caractéristiques suivantes :
- le becquet arrière (1) est de construction plate dans sa hauteur et présente une paroi supérieure et une paroi inférieure de grande surface (5 et 6) entre lesquelles, vu de l'arrière du véhicule (3), est réalisée dans le becquet arrière (1) une ouverture rectangulaire (8)dont les bords des grands côtés (14 et 15) sont orientés en direction de l'extension longitudinale du becquet arrière (1),
- un composant (9 ou 10) est inséré dans l'ouverture rectangulaire (8) du becquet arrière (1), vers l'avant selon la direction de marche du véhicule (3) et il est relié, de façon amovible, avec le becquet arrière (1) au moyen d'éléments de fixation (22, 23),
caractérisé par le fait que :
- les bords des petits côtés (13) de l'ouverture rectangulaire (8) sont disposés profondément dans le becquet arrière (1), sont orientés à l'encontre du sens (Y) de l'insertion du composant (9 ou 10) et, par leur face extérieure, servent de surface d'appui pour le composant (9 ou 10),
- les éléments de fixation (22, 23) du composant (9 ou 10) sont accessibles par sa face avant et sont fixés, de façon amovible, aux bords des petits côtés (13) de l'ouverture rectangulaire (8),
- le composant (9 ou 10) présente, à sa face inférieure une portion de paroi (20) qui s'étend approximativement sur toute la longueur du composant (9 ou 10) et, par son extrémité libre, est orientée dans le sens Y de l'insertion du composant et recouvre extérieurement le bord du grand côté inférieur (14) de l'ouverture rectangulaire (8) du becquet arrière.

2. Becquet arrière suivant la revendication 1, caractérisé par le fait que le composant (9) est un cache (10) remplaçant un feu (9) du véhicule.

3. Becquet arrière selon la revendication 1 ou 2, caractérisé par le fait que, partant des bords des petits côtés (13) de l'ouverture (8), la paroi supérieure (5), de grande surface, du becquet arrière (1) déborde par une portion de bordure (16) orientée vers l'arrière du véhicule.

4. Becquet arrière selon la revendication 3, caractérisé par le fait que la portion de bordure (16) qui déborde l'ouverture (8) est réalisée à double paroi et que par sa paroi inférieure elle devient les bords (13) des deux petits côtés de l'ouverture (8).

5. Becquet arrière selon l'une des revendications 1 à 4, caractérisé par le fait que les bords (13) des petits côtés et la grande bordure inférieure de l'ouverture rectangulaire (8) sont approximativement situés dans un plan.

6. Becquet arrière selon l'une des revendications 1 à 5, caractérisé par le fait que la portion (24) du bord du grand côté que recouvre la portion de paroi (20) du composant (9 ou 10) est suffisamment décalée vers le haut pour que la face extérieure du recouvrement, et donc la face extérieure de la portion de paroi (20) du composant, vienne affleurer la surface extérieure du becquet arrière (1) qui la jouxte.

7. Becquet arrière selon l'une des revendications 1 à 6, caractérisé par le fait que le recouvrement est formé d'une liaison du type rainure et languette dans le cas de laquelle le bord (14) du grand côté inférieur de l'ouverture (8) est la languette qui vient en prise dans une rainure (23) du composant (9 ou 10).

8. Becquet arrière selon la revendication 7, caractérisé par le fait que la rainure est une portion d'extrémité libre, pliée en forme de U en coupe, de la portion de paroi (20) du composant (9 ou 10).

9. Becquet arrière selon une des revendications 1 à 8, caractérisé par le fait que dans chacun des bords (13) des petits côtés de l'ouverture rectangulaire (8) est réalisée une ouverture de fixation dans laquelle vient en prise une vis de fixation qui sert de moyen de fixation (22) et passe par une ouverture prévue dans le composant (9 ou 10).

10. Becquet arrière selon l'une des revendications 1 à 9, caractérisé par le fait que lors de l'emploi d'un feu de véhicule automobile comme composant, la face extérieure de la portion inférieure de paroi (20) vient affleurer la face extérieure d'un verre de recouvrement (18), transparent à la lumière, du feu du véhicule automobile.

11. Becquet arrière selon l'une des revendications 1 à 10, caractérisé par le fait que sur les bords (23) des petits côtés de l'ouverture rectangulaire (8) est enfilé, avec auto-crantage ou collage, un morceau de tôle (23), en forme de U en coupe, qui sert d'écrou pour la vis de fixation (22).

12. Becquet arrière selon la revendication 10 ou 11, caractérisé par le fait que la portion de paroi (20) du composant (9 ou 10) est une pièce distincte et qu'elle est solidarisée avec une paroi du boîtier du feu du véhicule automobile.

13. Becquet arrière selon la revendications 10 ou 11, caractérisé par le fait que la portion de paroi (20) est réalisée d'une pièce avec le verre de recouvrement (18) transparent à la lumière ou avec une paroi latérale d'un boîtier du feu du véhicule automobile.

14. Becquet arrière selon l'une des revendications 10 à 13, caractérisé par le fait que la rainure (25) de la liaison du type à rainure et languette est formée par la portion de paroi (20) et par la paroi latérale, qui en est voisine, du boîtier (18, 19) du feu du véhicule automobile.
